(19) Europäisches Patentamt
European Patent Office
Office européen des brevets

(11) **EP 3 173 241 B1**

(12) **EUROPÄISCHE PATENTSCHRIFT**

| | |
|---|---|
| (45) Veröffentlichungstag und Bekanntmachung des Hinweises auf die Patenterteilung: **07.07.2021** **Patentblatt 2021/27** | (51) Int Cl.: ***B41J 2/175*** *(2006.01)* |

(21) Anmeldenummer: **16194974.8**

(22) Anmeldetag: **21.10.2016**

(54) **VERFAHREN ZUR DETEKTION VON TINTENLECKAGE IN EINER INKJET-DRUCKMASCHINE**

METHOD FOR DETECTION OF AN INK LEAKAGE IN AN INK JET PRINTER

PROCÉDÉ DE DÉTECTION DE FUITE D'ENCRE DANS UNE IMPRIMANTE À JET D'ENCRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.11.2015 DE 102015223032**

(43) Veröffentlichungstag der Anmeldung:
**31.05.2017 Patentblatt 2017/22**

(73) Patentinhaber: **Heidelberger Druckmaschinen AG**
**69115 Heidelberg (DE)**

(72) Erfinder: **Gülck, Matthias**
**24109 Melsdorf (DE)**

(56) Entgegenhaltungen:
WO-A1-2015/151340    JP-A- 2002 154 216
US-A- 5 663 750    US-B1- 6 312 073

**Beschreibung**

Die vorliegende Erfindung betrifft ein Verfahren und eine Vorrichtung zur Detektion von Tinten-Leckage während eines Druckprozesses in Inkjet-Druckmaschinen.

Die Erfindung liegt in dem technischen Gebiet des Inkjet-Drucks.

In der Druckindustrie werden viele verschiedene Druckverfahren eingesetzt. Das gebräuchlichste Druckverfahren für den Massendruck ist immer noch das zum Bereich der Flachdruckverfahren gehörende Offsetdruckverfahren. Zur Umsetzung existieren substratabhängig Bogenoffset-Druckmaschinen, die auf Druckbögen drucken, sowie Rollenoffset-Maschinen, die ein bahnförmiges Drucksubstrat bedrucken.

In den letzten Jahren ist neben dem klassischen Offsetdruck in der Druckindustrie auch der sogenannte Digitaldruck immer wichtiger geworden. Der Begriff Digitaldruck ist dabei ein Oberbegriff für verschiedene Druckverfahren, die alle gemeinsam haben, dass das Verfahren selbst und nicht nur zum Beispiel die Druckvorstufe oder die den Druck ausführende Maschine elektronisch gesteuert umgesetzt werden. Neben dem Laserdruck, bei dem es sich um ein elektronisch umgesetztes Flachdruckverfahren handelt, ist dabei insbesondere das Tintenstrahldruckverfahren, auch Inkjet-Druck genannt, von Bedeutung. Insbesondere mit dem Inkjet-Druck lassen sich dabei mittlerweile Druckergebnisse erzielen, die denen im klassischen Offset-Druck ebenbürtig sind. Nachdem Inkjet-Druck und auch Laser-Druck bei Privatanwendem und im Büro schon seit Jahren verwendet werden, kommen sie nun auch in der Druckindustrie vermehrt zum Einsatz. Wie alle Digitaldruckverfahren hat dabei der Inkjet-Druck gegenüber dem klassischen Offset-Druck große Vorteile hinsichtlich Flexibilität und Effizienz, da keine Druckplatten mehr angefertigt werden müssen. Das Druckbild wird beim Inkjet-Druck über einen oder mehrere Druckköpfe, die eine Vielzahl kleiner Druckdüsen besitzen, welche Tinte auf das Drucksubstrat aufbringen, erzeugt. Das Aufbringen, der Transport sowie die Lagerung der verwendeten Drucktinten sind also beim Inkjet-Druck ein extrem wichtiger Faktor. Ein besonderes Augenmerk gilt dabei dem Sicherstellen, dass in der gesamten Verarbeitungskette von der Tintenaufbewahrung über den Transport bis hin zu den Druckköpfen keine unerwünschte Tinte austritt. Eine solche Leckage würde, je nach Austrittsort, sehr unerwünschte Auswirkungen haben. Diese können von einem schlicht erhöhten Tintenverbrauch über erhöhte Wartungskosten und dem Produzieren von Makulatur bei Leckage in der Nähe des Drucksubstrates bis hin zu einem kompletten Ausfall der Druckmaschine führen.

Die Kontrolle der Druckmaschine auf eine eventuell erfolgte Leckage in der Tintenversorgung ist somit ein wichtiger Punkt beim Betrieb einer Inkjet-Druckmaschine.

Der Stand der Technik kennt zur Leckage-Kontrolle in Inkjet-Druckmaschinen dabei verschiedene Ansätze. Der gebräuchlichste Ansatz ist dabei das Anbringen verschiedenster Leckage-Sensoren in den sensiblen Bereichen für eine Leckage in der Druckmaschine. Aus dem US-Patent 6,402,277 B1 ist dabei das Anbringen von Sensoren in bestimmten Bereichen der Inkjet-Druckmaschine zur Leckage-Kontrolle bekannt. Die Sensoren bestehen dabei aus einem kleinen Auffangbehälter für Tinte, in denen zwei kleine stromdurchflossene elektrische Leiter angebracht sind, die räumlich voneinander getrennt sind. Tritt nun an der Stelle des Sensors unerwünschte Tinte aus, so läuft sie in den Auffangbehälter, wobei die stromleitfähige Tinte den Stromkreis zwischen den beiden räumlich getrennten Leitern schließt und damit der Sensorschaltkreis das unerwünschte Vorhandensein von Tinte erkennt, womit auf eine aufgetretene Leckage geschlossen werden kann.

Das Anbringen von Sensoren ist somit ein aus dem Stand der Technik bekanntes zuverlässiges Verfahren, was zudem den Vorteil hat, dass sich der Ort der aufgetretenen Tinten-Leckage grob eingrenzen lässt. Nachteilig bei der Leckage-Detektion mit Sensoren sind jedoch der Aufwand und die damit verbundenen Kosten des Anbringens der Sensoren in der Inkjet-Druckmaschine sowie die Kontrolle und Überwachung der Sensor-Ergebnisse. Zudem können die Sensoren ausfallen, zum Beispiel indem der Auffangbehälter des beschriebenen Sensors nicht gereinigt wird und die eingetrocknete Tinte die beiden Leiter abdeckt, so dass eine erneut eintretende Tinte den Stromkreis zwischen diesen beiden Leitern nicht mehr schließen kann.

Zur Vermeidung dieser Nachteile, die der sensorengestützte Detektionsvorgang mit sich bringt, ist es somit extrem von Vorteil, ein Verfahren zu verwenden, welches auf die Montage und den Betrieb von Leckage-Sensoren verzichten kann.

Ein wichtiger Schritt auf dem Weg dahin ist dabei das Berechnen des ungefähren Tintenverbrauchs der Druckmaschine. Dazu ist aus der deutschen Patentanmeldung DE 197 54 663 A1 ein Verfahren zur Berechnung der verbleibenden Tintenmenge in Inkjet-Druckern bekannt, wobei die verbleibende Tintenmenge durch Aufsummieren der verbrauchten Tintenmenge bei gleichzeitiger Kenntnis der vorhandenen Tintenmenge umgesetzt wird. Dabei wird der zyklisch durchgeführte Reinigungsvorgang für die Druckdüsen benutzt, um die verbrauchte Gesamttinte hochzurechnen. Da der Reinigungsvorgang automatisiert nach dem Durchfluss einer bestimmten Tintenmenge erfolgt und die Anzahl der Druckdüsen bekannt ist, lässt sich bei Aufzeichnen der Reinigungsvorgänge somit ein ungefährer Gesamtverbrauch hochrechnen.

Ein weiteres Verfahren zum Berechnen des Tintenverbrauchs in Inkjet-Druckmaschinen ist aus der chinesischen Patentanmeldung CN 10 359 35 59 A bekannt. Diese offenbart ein Verfahren zum Berechnen des Tintenverbrauchs durch Prognostizieren der Schichtdicke der Tinte auf dem Drucksubstrat bei Kenntnis des zu bedruckenden Bereiches auf allen zu druckenden Seiten, womit der Tintenverbrauch für einen noch durchzuführenden Druckauftrag prognostiziert werden kann. Ziel dieses Verfahrens ist es, eine Tintenbudgetierung sowie eine Kostenberechnung für den aktuellen Druckauftrag aufzustellen. Im Gegensatz zum Verfahren zur Berechnung der verbleibenden Tintenmenge aus der DE 197 54 663 A1 wird hier kein Verbrauch im laufenden Betrieb gemessen bzw. berechnet, sondern er wird vor Beginn des Druckauftrages anhand des zu realisierenden Druckbildes prognostiziert.

Die PCT-Anmeldung WO 2015 151340 A1 offenbart eine Leckagekontrolle, welche mögliche Tintenverluste durch Berechnen der Zeit, welche der Füllstand des Tintentanks für ein bis mehrere Füllstände benötigt, durchführt.

Die japanische Patentanmeldung JP 2002 154216 A offenbart ein System zum Prognostizieren, wann sich der Füllstand der Tintenpatronen eines Inkjet-Druckers dem Ende zuneigt. Dies wird erreicht, indem der aktuelle Füllstand der Patronen durch Piezo-Sensoren ermittelt wird, der reale Tintenverbrauch durch Zählen der gedruckten Tintentropfen und der Durchführung von Wartungsvorgängen ermittelt wird und mit beiden Werten dann eine Prognose wann sich die Tintenpatronen dem Leerzustand nähern, berechnet wird.

Mit diesen aus dem Stand der Technik bekannten Verfahren lässt sich somit der Verbrauch eines oder einer Inkjet-Druckmaschine berechnen bzw. prognostizieren, jedoch immer noch keine Leckage-Kontrolle, die ohne den Einsatz von Sensoren zur Leckage-Detektion auskommt, realisieren.

Die Aufgabe der vorliegenden Erfindung ist daher, ein Verfahren und eine Vorrichtung zu offenbaren, mit dem eine Tinten-Leckage in der Tintenversorgung einer Inkjet-Druckmaschine erkannt werden kann, in einer effizienten und kostengünstigen Art und Weise, ohne den Einsatz zusätzlicher Hardware.

Die Lösung dieser Aufgabe wird erfindungsgemäß durch ein Verfahren zur Detektion von Tinten-Leckage während eines Druckprozesses in einer Inkjet-Druckmaschine gelöst.

Es handelt sich dabei um ein Verfahren zur Detektion von Tinten-Leckage während eines Druckprozesses in einer Inkjet-Druckmaschine mit einem Workflow-System auf einem Rechner zur Kontrolle des Druckauftrages, einer Tintenversorgungseinheit für die Druckmaschine mit einem Tintentank mit Füllstandssensor und einem Steuerungsrechner mit einer Software zur Ansteuerung der Tintenversorgungseinheit, wobei die Druckköpfe in der Lage sind, unterschiedlich große Tintentropfen zu erzeugen, die folgenden Schritte umfassend:

1. Berechnung einer theoretisch verbrauchten Tintenmenge aus den Druckdaten der Vorstufe durch Aufsummieren der Tropfenvolumina für jede Seite des aktuellen Druckprozesses durch das Workflow-System

2. Senden der theoretisch verbrauchten Tintenmenge an die Software zur Ansteuerung der Tintenversorgung durch das Workflow-System

3. Ermittlung einer real verbrauchten Tintenmenge durch Analyse des Füllstandssensors des Tintentanks

4. Abgleich der theoretisch verbrauchten Tintenmenge mit der ermittelten realen verbrauchten Tintenmenge

5. Anzeigen eines Leckage-Alarms, wenn die real verbrauchte Tintenmenge höher als die theoretisch verbrauchte Tintenmenge ist.

Das Grundprinzip der vorliegenden Erfindung ist dabei, dass während der Abarbeitung eines Druckauftrages der real gemessene Verbrauch von Tinte mit einem vor Beginn des Druckauftrages berechneten theoretischen Tintenverbrauch abgeglichen wird. Ist der reale Tintenverbrauch deutlich höher als der vorab berechnete theoretische Tintenverbrauch, so muss auf das Vorhandensein eines Lecks in der Tintenversorgung geschlossen werden. Der theoretische Tintenverbrauch wird dabei von der Druckvorstufe, genauer dem Rechner, auf dem der Workflow installiert ist, welcher die Vorbereitung und Durchführung des Druckauftrages überwacht, berechnet. Zu dieser Berechnung werden die Druckdaten, die Anzahl der Druckbögen oder Seiten sowie Information über die verwendeten Tinten benötigt. Mit diesen Daten lässt sich, wie bereits aus dem Stand der Technik bekannt, ein ungefährer Verbrauch an Tinte für diesen Druckauftrag berechnen. Dieser theoretische Verbrauchswert wird dann vom RECHNER mit dem Workflow-System an die Inkjet-Druckmaschine, genauer gesagt, an den Steuerungsrechner, welcher für die Ansteuerung der Tintenversorgung zuständig ist, geschickt. Dieser kann anhand der Füllstandsanzeige des Tintentanks die real verbrauchte Tintenmenge für diesen Druckauftrag bestimmen und bei einer Abweichung vom theoretisch ermittelten Tintenverbrauchswert einen Leckage-Alarm ermitteln und anzeigen.

Erfindungsgemäß ist dabei, dass die theoretisch verbrauchte Tintenmenge für jede Druckseite des aktuellen Druckprozesses durch das Workflow-System berechnet wird. Das Berechnen der theoretisch verbrauchten Mindestmenge für jeweils eine einzelne Druckseite bzw. einen Druckbogen und das Senden dieser Information an die Ansteuerung der Tintenversorgung ist notwendig, damit diese nicht erst am Ende des Druckauftrages eine Leckage erkennen kann, sondern während des Druckbetriebes für einzelne Druckseiten.

Eine weitere bevorzugte Weiterbildung des erfindungsgemäßen Verfahrens ist dabei, dass die Tropfenvolumina mehrerer Druckseiten bis zu einer festgelegten theoretischen Mindestverbrauchsmenge zur theoretisch verbrauchten Tintenmenge durch das Workflow-System addiert werden. Da im Rahmen der bereits erwähnten laufenden Überwachung auf Tinten-Leckage ein regelmäßiger Abgleich von real verbrauchtem Tintenwert zu theoretisch berechnetem Verbrauchswert von Tinten erforderlich ist, so muss dabei berücksichtigt werden, dass der Tintenfüllstandssensor nur eine gewisse Mindestmenge von Tinte zuverlässig erkennen kann. Aufgrund dieser eingeschränkten Auflösung des Tintenfüllstandssensors kann somit ein zuverlässiger Vergleich zwischen theoretischem und real erreichtem Tintenverbrauch immer nur für eine gewisse Mindesttintenmenge erfolgen. Um den Abgleich dieser entsprechenden Mindesttintenmenge sicher zu stellen, muss somit die Tintenmenge, die für den Druck einer Druckseite erforderlich ist, so lange für mehrere Druckseiten aufaddiert werden, bis diese Mindesttintenmenge, die der Füllstandssensor in der Tintenversorgung erkennen kann, erreicht ist. Diese aufaddierte Mindestverbrauchsmenge wird dann vom Workflow-System an die Ansteuerungssoftware der Tintenversorgung geschickt, und diese kann dann nach Druck der aufaddierten Druckseiten, bzw. Bögen, berechnen, ob der reale Verbrauch den berechneten Verbrauch übersteigt und somit eine Leckage vorliegt.

Eine weitere bevorzugte Weiterbildung des erfindungsgemäßen Verfahrens ist dabei, dass zum Start eines neuen Messzyklus ein Synchronisationssignal an die Software zur Ansteuerung der Tintenversorgung durch das Workflow-System geschickt wird und nach Verbrauch der theoretisch verbrauchten Mindestmenge ein zweites Synchronisationssignal zum Beenden des neuen Messzyklus geschickt wird.

Um das beschriebene Verfahren vernünftig zu synchronisieren, schickt das Workflow-System ein Synchronisationssignal an die Ansteuerungssoftware der Tintenversorgung. Sind dann die zum Erreichen der Mindestverbrauchsmenge an Tinte benötigten Druckseiten an die Inkjet-Druckmaschine geschickt und somit gedruckt, schickt das Workflow-System eine zweite Synchronisationsnachricht an die Software zur Ansteuerung der Tintenversorgung, um den Messzyklus zu beenden. Die Ansteuerungssoftware kann daher anhand des Füllstandes zum Zeitpunkt des Starts des Synchronisationssignals und des Füllstandes zu jedem beliebigen Zeitpunkt des Messzyklus den realen Verbrauch berechnen und mit dem vom Workflow-System bereitgestellten, theoretisch berechneten Tintenverbrauch für die gedruckten Druckseiten abgleichen. Ist der reale Tintenverbrauch innerhalb, bzw. bis zum Ende des Messzyklus' größer als der theoretisch berechnete Tintenverbrauch, kann auf ein Leck geschlossen werden.

Eine weitere bevorzugte Weiterbildung des erfindungsgemäßen Verfahrens ist dabei, dass die Ermittlung der realen verbrauchten Tintenmenge während des Messzyklus durch Differenzbildung eines aktuell gemessenen Füllstandes des Tintentanks mit einem gespeicherten Füllstand des Tintentanks zu Beginn des neuen Messzyklus geschieht.

Eine weitere bevorzugte Weiterbildung des erfindungsgemäßen Verfahrens ist dabei, dass ein Leckage-Alarm nur dann angezeigt wird, wenn die real verbrauchte Tintenmenge die theoretisch verbrauchte Tintenmenge um einen vorher festgelegten Toleranzwert übertrifft. Da sowohl für die Berechnung der theoretischen Tintenverbrauchsmenge, als auch für das Messen der real verbrauchten Tintenmenge im Messzeitraum immer eine gewisse Schwankung vorhanden ist, und diese Werte somit niemals genau übereinstimmen können, macht es Sinn, Toleranzschwellwerte einzuführen, so dass erst bei Überschreiten dieser Toleranzwerte ein Leckage-Alarm angezeigt wird.

Eine weitere bevorzugte Weiterbildung des erfindungsgemäßen Verfahrens ist dabei, dass bei Auftreten eines Leckagealarms spezifische Maßnahmen gegen die erkannte Leckage eingeleitet werden, welche den Stopp aller Tintenpumpen in der Inkjet-Druckmaschine beinhalten.

Wird eine Leckage vom System erkannt, so werden unverzüglich Maßnahmen zur Unterbindung von Folgeschäden für die Druckmaschine eingeleitet. Diese Maßnahmen können demnach den sofortigen Stopp aller Pumpen in der Tintenversorgung umfassen, um das weitere Austreten von Tinte zu verhindern. Damit verbunden ist üblicherweise ein Stopp des aktuell durchgeführten Druckauftrages.

Eine weitere Lösung der erfindungsgemäßen Aufgabe stellt zudem eine Vorrichtung zur Detektion von Tinten-Leckage in einer Inkjet-Druckmaschine dar, wobei die Vorrichtung aus einem Workflow-System auf einem Rechner zur Kontrolle des Druckauftrages, einer Tintenversorgungseinheit für die Druckmaschine mit einem Tintentank mit Füllstandssensor und einem Steuerungsrechner mit einer Software zur Ansteuerung der Tintenversorgungseinheit besteht, wobei die Druckköpfe in der Lage sind, unterschiedlich große Tintentropfen zu erzeugen, eingerichtet zur Umsetzung eines Verfahrens gemäß einem der vorherigen Ansprüche, besteht, welche dadurch gekennzeichnet ist, dass das Workflow-System eingerichtet ist, anhand der Druckdaten in der Druckvorstufe eine theoretisch verbrauchte Tintenmenge durch Aufsummieren der Tropfenvolumina für jede Seite des aktuellen Druckprozesses zu berechnen, und diesen Wert an den Steuerungsrechner der Tintenversorgungseinheit zu senden, der Steuerungsrechner der Tintenversorgungseinheit die real verbrauchte Tintenmenge für diesen Zeitraum erfasst, und der Steuerungsrechner der Tintenversorgungseinheit eingerichtet ist, diese beiden Werte abzugleichen und bei festgestellter Differenz einen Leckage-Alarm auszulösen. Mit dieser Vorrichtung lassen sich die vorgestellten erfindungsgemäßen Verfahren zur Detektion von Tinten-Leckage in einer Inkjet-Druckmaschine umsetzen.

Das erfindungsgemäße Verfahren sowie funktionell vorteilhafte Weiterbildungen des Verfahrens werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugzeichen versehen. Die Zeichnungen zeigen:

Figur 1   den schematischen Aufbau einer Vorrichtung zur Detektion von Tinten-Leckage

Figur 2   den schematischen Ablauf des erfindungsgemäßen Verfahrens zur Detektion von Tinten-Leckage.

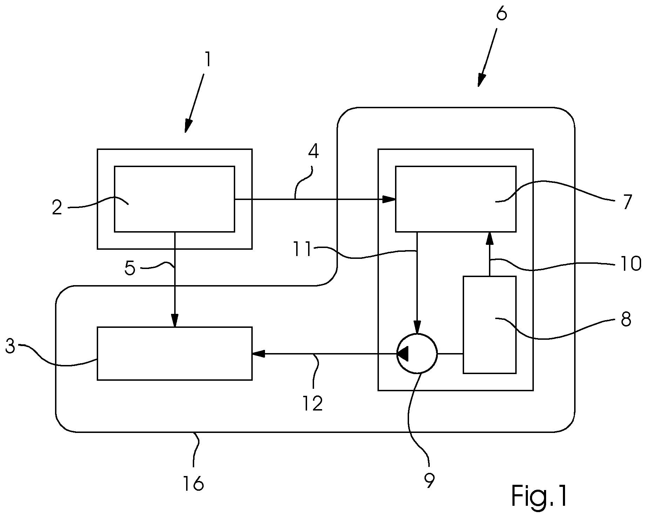

In Figur 1 ist dabei der bevorzugte Aufbau der erfindungsgemäßen Vorrichtung abgebildet. Er besteht in der Hauptsache aus einem Rechner 1, auf welchem die Software zur Bilderzeugung 2, betrieben wird, welche dem Workflow-System 2 zur Abarbeitung des Druckauftrages entspricht. Über die Software zur Bilderzeugung 2 werden Nachrichten an die Inkjet-Druckmaschine 16 gesendet. Diese umfassen dabei zum einen die eigentlichen Druckdaten 5, welche an die Druckköpfe 3 der Inkjet-Druckmaschine 16 geschickt werden, und zum anderen den berechneten theoretischen Tintenverbrauch 13 und die Synchronisationssignale, die an die Tintenversorgung 6, bzw. genauer, an die Software zur Ansteuerung der Tintenversorgung 7 geschickt werden. Die Tintenversorgung 6 besteht aus einem Rechner, der auch in integrierter Form vorliegen kann, auf welchem die Software zur Ansteuerung der Tintenversorgung 7 betrieben wird. Zudem beinhaltet sie einen Tintentank 8, welcher über einen Füllstandssensor verfügt, welcher von der Software zur Ansteuerung der Tintenversorgung 7 abgefragt werden kann. Zudem kontrolliert die Software zur Ansteuerung der Tintenversorgung 7 auch die Pumpen 9 zur Weiterleitung der Tinte 12 an die Druckköpfe 3 in Form einer Ansteuerung der Tintenpumpen 11.

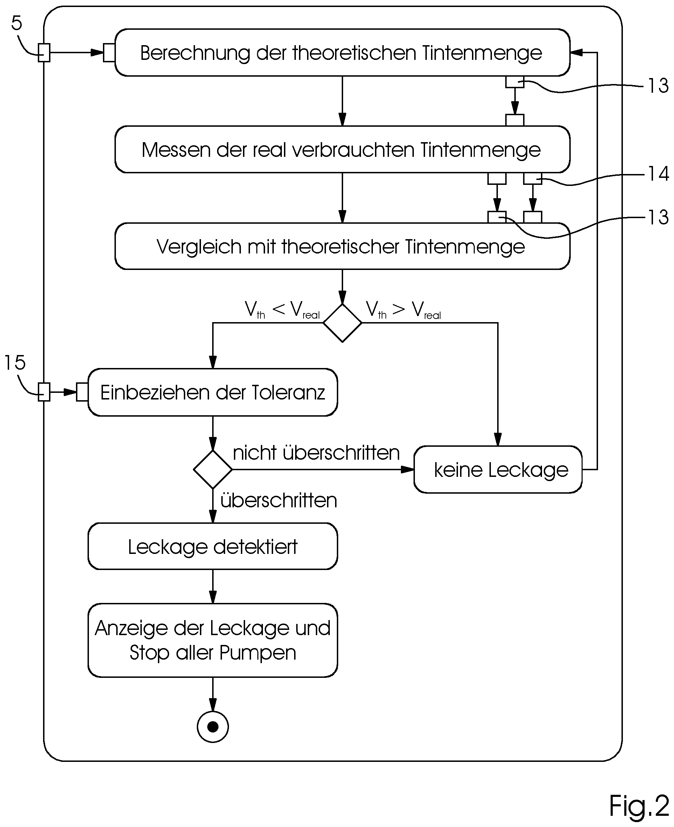

Der grundlegende Ablauf des erfindungsgemäßen Verfahrens wird in Figur 2 schematisch dargestellt.

Beim qualitativ hochwertigen Drucken mit Inkjetdruckmaschinen 16 werden die einzelnen Bildpunkte in Graustufen gedruckt, um feine Farbabstufungen zu ermöglichen.

Diese Graustufen werden durch unterschiedlich große Tintentropfen mit relativ genau bekanntem Volumen erzeugt, welche von der Software zur Bilderzeugung 2 auf dem Rechner 1 errechnet werden. Diese Software 2 sendet die Daten für die Bildpunkte an die Druckköpfe 3 der Druckmaschine 16 und kann somit bei jedem Druckbild 5 die theoretisch verbrauchte Tintenmenge 13 durch Aufsummieren der Tropfenvolumina berechnen. Die Tinte 12 wird von der Tintenversorgungseinheit 6 zu den Druckköpfen 3 gepumpt, wobei der Software zur Ansteuerung der Tintenversorgung 7 von der Software zur Bilderzeugung 2 über eine Verbindung Nachrichten 4 gesendet werden können.

Da sich die real verbrauchte Tintenmenge 14 durch die Software zur Ansteuerung der Tintenversorgung 7 mit vertretbarem Aufwand nur im Bereich von mehreren Millilitern hinreichend genau messen lässt, muss die Software zur Bilderzeugung 2 solange die Tropfenvolumina mehrerer Druckbilder 5 addieren, bis eine festgelegte theoretische Tintenmenge 13, z.B. 50ml, verdruckt wurde. Diese Tintenmenge 13 wird der Software zur Ansteuerung der Tintenversorgung 7 in einer Nachricht 4 mitgeteilt.

Um die Messung zu synchronisieren, schickt die Software zur Bilderzeugung 2 eine Nachricht 4 an die Software zur Ansteuerung der Tintenversorgung 7, wenn ein neuer Messzyklus gestartet wurde. Die Software zur Ansteuerung der Tintenversorgung 7 speichert die Füllmenge 10 im Tintentank 8 zu diesem Zeitpunkt.

Nachdem die Software zur Bilderzeugung 2 berechnet hat, dass die festgelegte theoretische Tintenmenge verdruckt wurde, wird eine neue Nachricht 4 an die Software zur Ansteuerung der Tintenversorgung 7 geschickt und somit der Messzyklus beendet.

Die Software zur Ansteuerung der Tintenversorgung 7 berechnet regelmäßig, bzw. innerhalb eines festgelegten Intervalls, aus der Füllmenge 10 im Tintentank 8 während des Messzyklus' und dem gespeicherten Füllstand 10 zu Beginn der Messung den realen Tintenverbrauch 14. Diesen Verbrauchswert 14 vergleicht die Software zur Ansteuerung der Tintenversorgung 7 mit der zuvor übertragenen theoretischen Tintenmenge 13. Ist der reale Verbrauchswert 14 größer, kann auf ein Leck in der Tintenversorgung geschlossen werden.

Da die real verbrauchte Tintenmenge 14 jedoch selten exakt dem Wert der vorher berechneten, theoretischen Tintenmenge 13 entspricht, ist es zudem notwendig einen Toleranzwert 15 zu definieren, um welchen die beiden Werte 13, 14 voneinander abweichen dürfen.

Insbesondere trifft dies natürlich auf einen wesentlich größeren Wert für die real verbrauchte Tinte 14 zu. Denn wenn vor oder gleichzeitig mit dem Eintreffen der zweiten Synchronisationsnachricht der reale Verbrauchswert 14 größer dem theoretischen Verbrauchswert 13, abzüglich der Toleranz 15, ist, dann ist unerwartet viel Tinte 12 verbraucht worden.

Dabei gilt der Zusammenhang:

$$V_{real} - V_{th} > V_{Tol}$$

Dieser unerwartet hohe Tintenverbrauch 14 zeigt somit ein Leck im Tintensystem 6 an. Als Folge dieser Toleranzüberschreitung wird eine Leckage angezeigt und in der Tintenversorgung 6 werden alle Pumpen 9 gestoppt, um das weitere Austreten von Tinte 12 zu verhindern.

Gleichzeitig lässt sich natürlich auch das umgekehrte Szenario damit abdecken. Ist z.B. der theoretische Verbrauchswert 13 größer dem realen Verbrauchswert 14, abzüglich der Toleranz 15, dann ist entsprechend zu wenig Tinte 12 verbraucht worden.

Gemäß dem Zusammenhang:

$$V_{th} - V_{real} > V_{Tol}$$

Dies kann z.B durch einen Defekt der Druckköpfe 3 verursacht werden. Ein solcher Fehler lässt sich über das erfindungsgemäße System ebenfalls anzeigen. Da jedoch im Gegensatz zum Szenario der Tintenleckage für dieses Szenario viele Gründe möglich sind, ist eine genaue Fehlerbestimmung für diese Messergebnisse schwierig.

**Bezugszeichenliste**

| | |
|---|---|
| 1 | Rechner |
| 2 | Workflowsystem |
| 3 | Druckkopf |
| 4 | Nachrichten an Tintenversorgung (Synchronisation, theoretischer Tintenverbrauch) |
| 5 | Druckdaten |
| 6 | Tintenversorgungseinheit |
| 7 | Software zur Ansteuerung der Tintenversorgung |
| 8 | Tintentank mit Füllstandssensor |
| 9 | Tintenpumpe(n) |
| 10 | Füllstand |
| 11 | Ansteuerung der Tintenpumpe(n) |
| 12 | Tinte |
| 13, $V_{th}$ | theoretischer Tintenverbrauch |
| 14, $V_{real}$ | realer Tintenverbrauch |
| 15, $V_{Tol}$ | Toleranzwert |
| 16 | Inkjet-Druckmaschine |

**Patentansprüche**

1. Verfahren zur Detektion von Tintenleckage während eines Druckprozesses in einer Inkjet-Druckmaschine (16) mit einem Workflowsystem (2) auf einem Rechner (1) zur Kontrolle des Druckauftrages, einer Tintenversorgungseinheit (6) für die Druckmaschine (16) mit einem Tintentank (8) mit Füllstandssensor und einem Steuerungsrechner mit einer Software zur Ansteuerung der Tintenversorgungseinheit (6), wobei die Druckköpfe (3) in der Lage sind, unterschiedlich große Tintentropfen zu erzeugen, die folgenden Schritte umfassend:

    • Berechnung einer theoretisch verbrauchten Tintenmenge (13) aus den Druckdaten (5) der Vorstufe durch Aufsummieren der Tropfenvolumina für jede Druckseite des aktuellen Druckprozesses durch das Workflowsystem (2)
    • Senden der theoretisch verbrauchten Tintenmenge (13) an die Software zur Ansteuerung der Tintenversorgung (7) durch das Workflowsystem (2)
    • Ermittlung einer real verbrauchten Tintenmenge (14) durch Analyse des Füllstandssensors des Tintentanks (8)
    • Abgleich der theoretisch verbrauchten Tintenmenge (13) mit der ermittelten realen verbrauchten Tintenmenge (14)
    • Anzeigen eines Leckagealarms wenn die real verbrauchte Tintenmenge (14) höher als die theoretisch verbrauchte Tintenmenge (13) ist

2. Verfahren nach Anspruch 1, **dadurch gekennzeichnet,** **dass** die Tropfenvolumina mehrerer Druckseiten bis zu einer festgelegten theoretischen Mindest-Verbrauchs-Tintenmenge zur theoretisch verbrauchten Tintenmenge (13) durch das Workflowsystem (2) addiert werden

3. Verfahren nach Anspruch 2, **dadurch gekennzeichnet,** **dass** zum Start eines neuen Messzyklus ein Synchronisationssignal an die Software zur Ansteuerung der Tintenversorgung (7) durch das Workflowsystem (2) geschickt wird und nach Verbrauch der theoretisch verbrauchten Tintenmenge (13) ein zweites Synchronisationssignal zum Beenden des neuen Messzyklus geschickt wird.

4. Verfahren nach Anspruch 3, **dadurch gekennzeichnet,** **dass** die Ermittlung der realen verbrauchten Tintenmenge (14) während des Messzyklus durch Differenzbildung eines aktuell gemessenen Füllstandes des Tintentanks (8) mit einem gespeicherten Füllstand des Tintentanks (8) zu Beginn des neuen Messzyklus geschieht.

5. Verfahren nach einem der vorherigen Ansprüche, **dadurch gekennzeichnet,** **dass** ein Leckagealarm nur dann angezeigt wird, wenn die real verbrauchte Tintenmenge (14) die theoretisch verbrauchte Tintenmenge (13) um einen vorher festgelegten Toleranzwert (15) übertrifft.

6. Verfahren nach einem der vorherigen Ansprüche, **dadurch gekennzeichnet,** **dass** bei Auftreten eines Leckagealarms spezifische Maßnahmen gegen die erkannte Leckage eingeleitet werden, welche den Stopp aller Tintenpumpen (9) in der Inkjet-Druckmaschine (16) beinhalten.

7. Vorrichtung zur Detektion von Tintenleckage in einer Inkjet-Druckmaschine (16) mit einem Workflowsystem (2) auf einem Rechner (1) zur Kontrolle des Druckauftrages, einer Tintenversorgungseinheit (6) für die Druckmaschine (16) mit einem Tintentank (8) mit Füllstandssensor, wobei die Druckköpfe (3) in der Lage sind, unterschiedlich große Tintentropfen zu erzeugen und einem Steuerungsrechner mit einer Software zur Ansteuerung der Tintenversorgungseinheit (7), eingerichtet zur Umsetzung eines Verfahrens gemäß einem der vorherigen Ansprüche, wobei das Workflowsystem (2) eingerichtet ist anhand der Druckdaten (5) in der Druckvorstufe eine theoretisch verbrauchte Tintenmenge (13) durch Aufsummieren der Tropfenvolumina für jede Druckseite des aktuellen Druckprozesses zu berechnen und diesen Wert (13) an den Steuerungsrechner der Tintenversorgungseinheit (6) zu senden,

der Steuerungsrechner der Tintenversorgungseinheit (6) die real verbrauchte Tintenmenge (14) für diesen Zeitraum mit Hilfe des Füllstandssensors des Tintentanks (8) erfasst und

der Steuerungsrechner der Tintenversorgungseinheit (6) eingerichtet ist, diese beiden Werte (13, 14) abzugleichen und bei festgestellter Differenz einen Leckagealarm auszulösen.

## Claims

1. Method of detecting ink leakage during a printing operation in an inkjet printing machine (16) including a workflow system (2) on a computer (1) for controlling the print job, an ink supply unit (6) for the printing machine (16) including an ink reservoir (8) with a filling level sensor and a control unit with a software for actuating the ink supply unit (6), wherein the print heads (3) are capable of generating ink drops of different sizes, the method comprising the steps of

   • based on the pre-print department's printing data (5), calculating an amount of ink (13) that has theoretically been consumed by adding up the drop volumes for every printed page of the current printing operation by means of the workflow system (2)
   • sending the amount of ink (13) that has theoretically been consumed to the software for actuating the ink supply (7) by means of the workflow system (2)
   • determining an amount of ink (14) that has actually been consumed by analyzing the filling level sensor of the ink reservoir (8)
   • comparing the amount of ink (13) that has theoretically been consumed to the determined amount of ink (14) that has actually been consumed,
   • displaying a leakage alert if the amount of ink (14) that has actually been consumed is greater than the amount of ink (13) that has theoretically been consumed.

2. Method according to claim 1,
   **characterized in that** up to a defined theoretical minimum consumption ink amount, the workflow system (2) adds the drop volumes of multiple printed pages to the amount of ink (13) that has theoretically been consumed.

3. Method according to claim 2,
   **characterized in that** the workflow system (2) sends a synchronization signal to the software for actuating the ink supply (7) to start a new measurement cycle and a second synchronization signal to terminate the new measurement cycle when the ink amount (13) that has theoretically been consumed has been consumed.

4. Method according to claim 3,
   **characterized in that** the amount of ink (14) that has actually been consumed is calculated during the measurement cycle by calculating the difference between a current measured filling level in the ink reservoir (8) and a saved filling level in the ink reservoir (8) at the beginning of the new measuring cycle.

5. Method according to any one of the preceding claims,
   **characterized in that** a leakage alert is only displayed if the amount of ink (14) that has actually been consumed exceeds the amount of ink (13) that has theoretically been consumed by a predefined tolerance value (15).

6. Method according to any one of the preceding claims,
   **characterized in that** when a leakage alert occurs, specific measures against the detected leakage are introduced, including a stopping of all ink pumps (9) in the inkjet printing machine (16).

7. Device for detecting ink leakage in an inkjet printing machine (16) including a workflow system (2) on a computer (1) for controlling the print job, an ink supply unit (6) for the printing machine (16) including an ink reservoir (8) with a filling level sensor, wherein the print heads (3) are capable of generating ink drops of different sizes, and including a control unit with a software for actuating the ink supply unit (7), equipped to implement a method in accordance with any one of the preceding claims, wherein the workflow system (2) is equipped to calculate an amount of ink (13) that has theoretically been consumed on the basis of the pre-print department's printing data (5) by summing up the drop volumes for every printed page of the current print job and to send this value (13) to the control unit of the ink supply unit (6), wherein the control unit of the ink supply unit (6) determines the amount of ink (14) that has actually been consumed for this period of time with the aid of the filling level sensor of the ink reservoir (8), and wherein the control unit of the ink supply unit (6) is equipped to compare these two values (13, 14) and to trigger a leakage alert if a difference is found.

## Revendications

1. Procédé de détection de fuite d'encre pendant un processus d'impression dans une machine à imprimer à jet d'encre (16) avec un système de flux de travail (2) sur un ordinateur (1) pour le contrôle du travail d'impression, une unité d'alimentation en encre (6) pour la machine à imprimer (16) avec un réservoir d'encre (8) doté d'un capteur de niveau et un ordinateur de commande avec un logiciel pour commander l'unité d'alimentation en encre (6), pour lequel les têtes d'impression (3) sont capables de produire des gouttes d'encre de différentes tailles, comprenant les étapes suivantes :

   • calcul d'un volume d'encre théoriquement consommé (13) à partir des données d'impression (5) de prépresse par addition des volumes de gouttes pour chaque page à imprimer du processus d'impression en cours par le système de flux de travail (2)
   • transmission de la quantité d'encre théoriquement consommée (13) au logiciel de commande de l'alimentation en encre (7) par le système de flux de travail (2)
   • détermination d'une quantité d'encre réellement consommée (14) par analyse du capteur de niveau de remplissage du réservoir d'encre (8)
   • comparaison de la quantité d'encre théoriquement consommée (13) avec la quantité d'encre réellement consommée déterminée (14)
   • affichage d'une alarme de fuite si la quantité d'encre réellement consommée (14) est supérieure à la quantité d'encre théoriquement consommée (13)

2. Procédé selon la revendication 1,
   **caractérisé en ce**
   **que** les volumes de gouttes de plusieurs pages imprimées sont ajoutés à la quantité d'encre théoriquement consommée (13) par le système de flux de travail (2) jusqu'à obtenir une quantité d'encre consommée théorique minimale définie

3. Procédé selon la revendication 2,
   **caractérisé en ce**
   **que**, lors du démarrage d'un nouveau cycle de mesure, un signal de synchronisation est envoyé au logiciel pour commander l'alimentation en encre (7) par le système de flux de travail (2) et, après consommation de la quantité d'encre théoriquement consommée (13), un second signal de synchronisation est transmis pour terminer le nouveau cycle de mesure.

4. Procédé selon la revendication 3,
   **caractérisé en ce**

**que** la détermination de la quantité réelle d'encre consommée (14) pendant le cycle de mesure est réalisée par formation d'une différence entre un niveau de remplissage actuellement mesuré du réservoir d'encre (8) et un niveau de remplissage mémorisé du réservoir d'encre (8) au début du nouveau cycle de mesure.

5. Procédé selon l'une des revendications précédentes,
   **caractérisé en ce**
   **qu'**une alarme de fuite n'est affichée que si la quantité d'encre réellement consommée (14) dépasse la quantité d'encre théoriquement consommée (13) d'une valeur de tolérance préalablement déterminée (15).

6. Procédé selon l'une des revendications précédentes,
   **caractérisé en ce**
   **que** lorsqu'une alarme de fuite se produit, des mesures spécifiques sont initiées contre la fuite détectée, incluant l'arrêt de toutes les pompes à encre (9) dans la machine à imprimer à jet d'encre (16).

7. Dispositif de détection de fuite d'encre dans une machine à imprimer à jet d'encre (16) avec un système de flux de travail (2) sur un ordinateur (1) pour le contrôle du travail d'impression, une unité d'alimentation en encre (6) pour la machine à imprimer (16) avec un réservoir d'encre (8) doté d'un capteur de niveau de remplissage, les têtes d'impression (3) étant capables de produire des gouttes d'encre de différentes tailles, et un ordinateur de commande avec un logiciel pour la commande de l'unité d'alimentation en encre (7), configuré pour la mise en œuvre d'un procédé selon l'une des revendications précédentes, dans lequel le système de flux de travail (2) est configuré pour calculer une quantité d'encre théoriquement consommée (13) sur la base des données d'impression (5) dans la phase de prépresse en additionnant les volumes de gouttes pour chaque page à imprimer du processus d'impression en cours et pour envoyer cette valeur (13) à l'ordinateur de commande de l'unité d'alimentation en encre (6), l'ordinateur de commande de l'unité d'alimentation en encre (6) détectant la quantité d'encre réellement consommée (14) pour cette période à l'aide du capteur de niveau de remplissage du réservoir d'encre (8), et l'ordinateur de commande de l'unité d'alimentation en encre (6) étant configuré pour comparer ces deux valeurs (13, 14) et pour déclencher une alarme de fuite si une différence est détectée.

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6402277 B1
- DE 19754663 A1
- CN 103593559 A
- WO 2015151340 A1
- JP 2002154216 A